# EUROPÄISCHE PATENTSCHRIFT

(11) **EP 3 053 782 B1**
(45) Veröffentlichungstag und Bekanntmachung des Hinweises auf die Patenterteilung: **10.04.2019**
(21) Anmeldenummer: 16153156.1
(22) Anmeldetag: 28.01.2016
(51) Int. Cl.: B60R 19/56

(54) **SCHNELLVERBINDUNGSVORRICHTUNG ZUR VERBINDUNG EINES UNTERFAHRSCHUTZES MIT EINEM FAHRZEUG UND FAHRZEUG UMFASSEND EINE SOLCHE SCHNELLVERBINDUNGSVORRICHTUNG**
QUICK CONNECTING DEVICE FOR CONNECTING UNDERRIDE PROTECTION WITH A VEHICLE AND VEHICLE COMPRISING SUCH A QUICK CONNECTING DEVICE
DISPOSITIF DE LIAISON RAPIDE DESTINE A RELIER UNE PROTECTION ANTI-ENCASTREMENT A UN VEHICULE AUTOMOBILE ET VEHICULE AUTOMOBILE COMPRENANT UN TEL DISPOSITIF DE LIAISON RAPIDE

(30) Priorität: 06.02.2015 DE 102015202152
(43) Veröffentlichungstag der Anmeldung: 10.08.2016
(73) Patentinhaber: Franz Xaver Meiller Fahrzeug- und Maschinenfabrik-GmbH & Co KG, 80997 München (DE)
(72) Erfinder: SANKTJOHANSER, Paul, 82380 Peißenberg (DE)
(74) Vertreter: Tiesmeyer, Johannes

(56) Entgegenhaltungen:
- DE-A1- 2 616 011
- DE-A1- 10 330 726
- DE-A1-102005 031 147
- DE-A1-102007 018 108
- DE-A1-102007 023 751
- DE-U1- 9 307 389
- DE-U1-202009 007 533

## Beschreibung

Die Erfindung betrifft eine Schnellverbindungsvorrichtung zur Verbindung eines Unterfahrschutzes mit einem Fahrzeug umfassend ein Unterfahrschutzhalterungselement und ein Rahmenverbindungselement.

Unterfahrschutzeinrichtungen insbesondere für Lastentransportfahrzeuge sind im Stand der Technik gut bekannt und umfassen im Allgemeinen eine längliche, horizontal angeordnete Unterfahrschutzbarriere zur Sicherung eines heckseitigen Bereichs eines Fahrzeugs gegen das Auffahren bzw. Unterfahren durch ein anderes Fahrzeug. Die Unterfahrschutzbarriere stellt somit für ein auffahrendes Fahrzeug einen definierten Kollisionsbereich bereit, welcher die Kollisionskräfte in die Knautschzone des auffahrenden Fahrzeugs einleitet. Da die Unterfahrschutzbarriere jedoch in einigen Betriebszuständen des Lastentransportfahrzeugs hinderlich sein kann, beispielsweise beim Be- und Entladen oder bei einem Einsatz mit einem Straßenfertiger, ist es bekannt, die Unterfahrschutzbarriere verstellbar oder abnehmbar zu gestalten.

Verstellbare Unterfahrschutzeinrichtungen, wie sie beispielsweise aus der DE 93 07 389 U1 und der DE 10 2005 031 147 A1 bekannt sind, weisen einen Mechanismus zum Bewegen der Unterfahrschutzbarriere in eine Sicherungsstellung und eine Freigabestellung auf. Damit lässt sich zwar eine Behinderung des Betriebs durch die Unterfahrschutzbarriere in vielen Fällen vermeiden, jedoch befindet sich die Unterfahrschutzbarriere immer noch im heckseitigen Bereich des Fahrzeugs und kann deshalb hinderlich sein und ferner ist der Mechanismus zur Bewegung der Unterfahrschutzbarriere häufig komplex und teuer.

Eine Verbindungsvorrichtung zur abnehmbaren Verbindung eines Unterfahrschutzes mit einem Fahrzeug umfassend ein Unterfahrschutzhalterungselement und ein Rahmenverbindungselement ist aus der DE 103 30 726 A1 bekannt. Diese Verbindungsvorrichtung erlaubt jedoch kein schnelles Anbringen oder Entfernen der Unterfahrschutzbarriere, denn das Unterfahrschutzhalterungselement ist mit dem Rahmenverbindungselement, der Teil des Fahrzeugrahmens ist, durch jeweils vier Schrauben und Muttern verbunden, wobei im verschraubten Zustand die Unterfahrschutzbarriere festgeklemmt ist. Dadurch erfordert das Abnehmen und Anbringen der Unterfahrschutzbarriere jeweils ein Werkzeug zum Lösen bzw. Festdrehen der Muttern und einen erheblichen Arbeitsaufwand. Dadurch ist die Verbindungsvorrichtung bei Anwendungen, die ein häufiges Anbringen und Entfernen der Unterfahrschutzbarriere erfordern, aufwändig und kostenintensiv durch den wiederholten Zeit- und Arbeitsaufwand beim Anbringen und Entfernen der Unterfahrschutzbarriere.

DE 103 30 726 A1 offenbart ein Fahrzeug gemäß dem Oberbegriff vom Anspruch 1. DE 26 16 011 A1 und DE 10 2007 023 751 A1 offenbaren Schnellverbindungsvorrichtungen.

Vor diesem Hintergrund ist es Aufgabe der vorliegenden Erfindung, eine Schnellverbindungsvorrichtung der oben genannten Art bereitzustellen, welche einerseits eine stabile Verbindung der Unterfahrschutzbarriere mit dem Fahrzeug und andererseits ein schnelles und werkzeugloses Entfernen dieser erlaubt.

Zur Lösung dieser Aufgabe wird gemäß der vorliegenden Erfindung ein Fahrzeug mit den Merkmalen vom Anspruch 1 bereitgestellt. Vorteilhafte Ausgestaltungen sind Gegenstand der abhängigen Ansprüche.

Das Unterfahrschutzelement und das Rahmenverbindungselement der erfindungsgemäßen Schnellverbindungsvorrichtung weisen zueinander komplementäre Eingriffsbereiche auf, so dass das Unterfahrschutzhalterungselement mit dem Rahmenverbindungselement in Eingriff gebracht werden kann, wobei ein werkzeuglos betätigbares Riegelelement an dem Unterfahrschutzhalterungselement und/oder dem Rahmenverbindungselement angeordnet ist, um im Falle des Eingriffs des Unterfahrschutzhalterungselements und des Rahmenverbindungselements das Unterfahrschutzhalterungselement mit dem Rahmenverbindungselement zu verriegeln. Ein Eingriffsbereich ist dabei ein Vorsprungseingriffsbereich mit mindestens einem Vorsprung mit einem Bund und der andere Eingriffsbereich ein Ausnehmungseingriffsbereich mit mindestens einer Ausnehmung, die bei Eingriff des Unterfahrschutzhalterungselements und des Rahmenverbindungselements den Vorsprung des Vorsprungseingriffsbereichs teilweise umschließt. Ferner ist der Ausnehmungseingriffsbereich in Form einer Platte und/oder plattenförmig und/oder mit einem plattenförmigen Teilbereich ausgebildet. Dieser plattenförmige Bereich definiert eine Plattenebene. Bevorzugt weist der Ausnehmungseingriffsbereich ferner mindestens zwei Ausnehmungen auf, die bezogen auf die Plattenebene als einseitig offene Einbuchtungen des Ausnehmungseingriffsbereich ausgebildet sind, wobei mindestens zwei der einseitig offenen Einbuchtungen in verschiedenen Richtungen offen sind.

Dadurch kann durch in Eingriffbringen des Unterfahrschutzhalterungselements und des Rahmenverbindungselements und anschließendes Betätigen des Riegelelements eine an dem Unterfahrschutzhalterungselement befestigte Unterfahrschutzbarriere schnell und werkzeuglos mit dem Rahmenverbindungselement und damit mit einem mit dem Rahmenverbindungselement verbundenen Fahrzeug verbunden werden. Ebenso schnell kann durch das Betätigen bzw. Lösen des Riegelelements und das anschließende Trennen des Unterfahrschutzhalterungselements von dem Rahmenverbindungselement der Unterfahrschutz bzw. die Unterfahrschutzbarriere von einem Fahrzeug getrennt werden. Damit können sowohl komplexe Verstellmechanismen als auch Werkzeug erfordernde und aufwändige Trennvorgänge, wie sie jeweils im Stand der Technik bekannt sind, vermieden werden. Ferner kann damit das Unterfahrschutzhalterungselement direkt in der richtigen Position gegenüber dem Rahmenverbindungselement zur Betätigung des Riegelelements positioniert sein. Damit wird insbesondere vermieden, dass gleichzeitig Kraft aufgewendet werden muss, um das Unterfahrschutzhalterungselement und ggf. eine daran befestigte Unterfahrschutzbarriere zu halten und gleichzeitig das Riegelelement zu betätigen. Durch die verschiedenen Ausrichtungen der Ausnehmungen lässt sich einfach das Einhängen des Unterfahrschutzhalterungselements an das Rahmenverbindungselement realisieren.

Bevorzugt liegt der Ausnehmungseingriffsbereich wenigstens teilweise an dem Bund an. Dadurch lässt sich der Eingriff besonders leicht herstellen, und zwar insbesondere so, dass der Eingriff als eine Art Einhängen funktioniert, so dass das Unterfahrschutzhalterungselement positionsstabil mit dem Rahmenverbindungselement in Eingriff steht bzw. bei diesem eingehängt ist.

Bevorzugt weist das Rahmenverbindungselement den Vorsprungseingriffsbereich und das Unterfahrschutzhalterungselement den Ausnehmungseingriffsbereich auf. Dies ist aus Sicherheitsgründen vorteilhaft, denn wenn die Ausnehmungen an dem Rahmenverbindungselement angeordnet sind, besteht beim Betrieb mit entfernten Unterfahrschutzhalterungselement eine größere Gefahr, dass unbeabsichtigt etwas an den Ausnehmungen des Rahmenverbindungselements hängen bleibt. Sind hingegen die Vorsprünge an dem Rahmenverbindungselement angeordnet, ist diese Gefahr geringer.

Bevorzugt sind die Ausnehmungen halbkreisförmig bzw. weisen einen halbkreisförmigen Abschnitt auf, an dem sich ein gerader Abschnitt anschließt, an welchem sich die Öffnung anschließt. Bevorzugt sind mindestens zwei der einseitig offenen Einbuchtungen in zueinander nahezu rechtwinkligen Richtungen offen.

Bevorzugt umfasst das Riegelelement einen Bolzen, um die Verriegelung zu bewirken. Dabei wird der Bolzen durch die Betätigung verschoben, so dass er über das Unterfahrschutzhalterungselement bzw. das Rahmenverbindungselement hinausragt und durch Zusammenwirken mit einen Verriegelungsloch des Rahmenverbindungselements bzw. des Unterfahrschutzhalterungselements die Verriegelung bewirkt. Das Verriegelungsloch kann dabei genauso wie das Riegelelement Teil des jeweiligen Eingriffsbereich sein und/oder dem jeweiligen Eingriffsbereich naheliegen. Die Verriegelung mit Bolzen ist deshalb vorteilhaft, da ein durch ein Loch gehender Bolzen eine relativ stabile Verriegelung der Rotation von Riegelelement und Unterfahrschutzhalterungselement zueinander bewirkt, während gleichzeitig die Blockierung in Richtung entlang der durch die Verriegelung blockierten Rotationsachse bereits durch geeignete Ausbildung der Eingriffsbereiche realisierbar ist, insbesondere wenn wie vorher beschrieben die Eingriffsbereiche durch Vorsprünge mit Bund ausgebildet sind, denn dann blockiert der Bund die Verschiebung entlang der Rotationsachse. Damit ist dann insbesondere in der Ausführung mit Einhängen des Unterfahrschutzhalterungselements eine einfache und stabile Verriegelung realisiert. Gleichzeitig lässt sich das Verschieben und anschließende Fixieren eines Bolzens leicht durch Mechanismen realisieren, die kein Werkzeug erfordern. Dafür kommt insbesondere jeder Mechanismus infrage, der ein Fixieren des Bolzens in der aus dem Unterfahrschutzhalterungselement bzw. dem Rahmenverbindungselement herausragenden Stellung ermöglicht.

Bevorzugt umfasst das Riegelement einen Bolzenaufnahmeraum und eine Feder, wobei der durch die Feder vorgespannte Bolzen durch Betätigung entlang des Bolzenaufnahmeraums verschoben wird und bei Verriegelung aus diesem hinausragt. Dadurch kann die Verriegelung einfach durch Verschieben des Bolzens in einer Richtung entlang des Bolzenaufnahmeraums betätigt werden, während gleichzeitig beim Lösen der Verriegelung die Feder eine Rückstellung des Bolzens in den Bolzenaufnaheraum bewirkt, so dass dieser über den Bolzenaufnahmeraum nicht mehr hinausragt, womit eine leichte Lagerung und ein besserer Schutz des Mechanismus realisiert sind.

Bevorzugt ist der Bolzenaufnahmeraum zylinderförmig, insbesondere in Form eines Zylinders mit einer kreisförmigen Grundfläche, wobei der Bolzen einen dem Durchmesser des Bolzenaufnahmeraums entsprechenden Kopfbereich umfasst, bevorzugt einen Kopfbereich, dessen Querschnittsfläche genau mit der Grundfläche des Zylinders übereinstimmt. Weiter umfasst der Bolzen bevorzugt einen gegenüber dem Kopfbereich dünneren Halsbereich, wobei die Feder um den Halsbereich herum angeordnet ist und zwischen dem Kopfbereich und einem Boden des Bolzenaufnahmeraums angeordnet und vorgespannt ist, wobei sich der Halsbereich durch ein Loch im Boden des Bolzenaufnahmeraums über diesen hinaus erstreckt und einen Handgriffverbindungsbereich ausbildet. Über diesen Handgriffverbindungsbereich kann damit die Verriegelung durch Verschiebung des Bolzens einfach betätigt werden, indem der Handgriffverbindungsbereich in Richtung entlang des Bolzenaufnahmeraums verschoben wird. Insbesondere kann der Handgriffverbindungsbereich mit einem Handgriff verbunden werden, durch den sich dann das Riegelelement leicht und werkzeuglos betätigen lässt.

Somit ist auch bevorzugt das Riegelelement durch einen Handgriff betätigbar. Dies stellt sicher, dass kein Werkzeug zum Lösen des Unterfahrschutzhalterungselements und damit des Unterfahrschutzes bzw. der Unterfahrschutzbarriere von dem Fahrzeug notwendig ist.

Bevorzugt weist der Handgriff eine Handgriffschrägfläche und das Riegelelement eine weitere komplementäre Gegenschrägfläche auf, wobei durch Drehung des Handgriffs die Handgriffschrägfläche und die Gegenschrägfläche gegeneinander gedreht werden, wobei durch die damit verbundene Verschiebung das Riegelelement betätigbar ist. Dies lässt sich insbesondere realisieren, indem im verriegelten Zustand die Handgriffschrägfläche und die Gegenschrägfläche flächig aneinander anliegen und der Handgriff bzw. die Handgriffschrägfläche mit einem Teil des Bolzens, beispielsweise dem Halsbereich, verbunden ist. Dann führt eine Drehung des Handgriffs um das Riegelelement herum dazu, dass die beiden Schrägflächen nicht mehr flächig aneinanderliegen können, sondern dass die Schrägflächen durch Aneinanderliegen ihrer beiden am weitesten hervorstehenden Enden gegeneinander maximal verschoben sind, wodurch ein mit dem Handgriff verbundener Bolzen in das Riegelelement hineingezogen wird, wodurch die Verriegelung gelöst werden kann. Aus dieser Stellung führt dann umgekehrt ein weiteres Drehen des Handgriffs wieder zu einer Verriegelung.

Die Verbindung des Unterfahrschutzhalterungselements mit der Unterfahrschutzbarriere kann durch weitere plattenförmige Bereiche des Unterfahrschutzhalterungselements sowie Löcher zum Verschrauben mit der Unterfahrschutzbarriere realisiert werden.

Als erfindungsgemäße Fahrzeuge kommen bevorzugt Lastkraftwagen, Anhänger, Sattelauflieger, andere Lasttransportfahrzeuge und insbesondere jedes Fahrzeug infrage, bei dem aufgrund des Aufbaus die Gefahr eines Unterfahrens durch einen Personenkraftwagen in der Art besteht, dass der Frontbereich bzw. der Motorbereich des PKW's einen Aufbau des Fahrzeugs unterfahren könnte, während die Fahrgastzelle ungebremst oder nahezu ungebremst mit einem Aufbau des Fahrzeugs kollidieren kann.

Unter Bezugnahme auf die Figuren wird nachstehend ein Ausführungsbeispiel der Erfindung mit einer bestimmten Merkmalskombination dargestellt. Darüber hinaus ist aber auch jedes in den Figuren und/oder der obigen oder der nachfolgenden Beschreibung offenbarte Merkmal in Verbindung mit Anspruch 1 Teil der vorliegenden Erfindung. Ferner ist auch jede Kombination dieser Merkmale in Verbindung mit Anspruch 1

Teil der vorliegenden Erfindung.
- Figur 1: zeigt ein Unterfahrschutzhalterungselement einer erfindungsgemäßen Schnellverbindungsvorrichtung in Seitenansicht.
- Figur 2: zeigt einen Schnitt durch das Unterfahrschutzhalterungselement aus Figur 1 in einer Ebene senkrecht zur Bildebene der Figur 1.
- Figur 3: zeigt eine perspektivische Ansicht eines Rahmenverbindungselements der erfindungsgemäßen Schnellverbindungsvorrichtung.
- Figuren 4 - 7: zeigen ein Einhängen des Unterfahrschutzhalterungselements in das mit einem Fahrzeug verbundenen Rahmenverbindungselement bei der erfindungsgemäßen Schnellverbindungsvorrichtung.

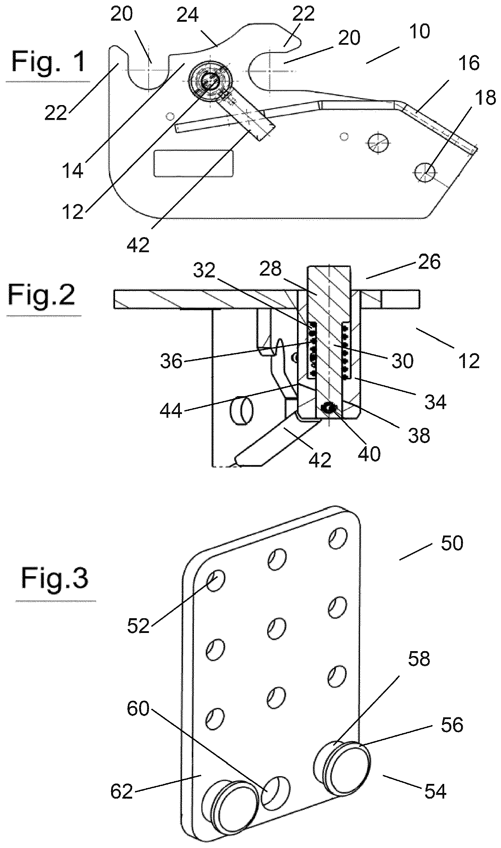

Wie in Figur 1 und Figur 2 gezeigt, umfasst ein Unterfahrschutzhalterungselement 10 einer erfindungsgemäßen Schnellverbindungsvorrichtung zur Verbindung eines Unterfahrschutzes mit einem Fahrzeug ein Riegelelement 12 und einen Ausnehmungseingriffsbereich 14. Ferner weist das Unterfahrschutzhalterungselement 10 plattenförmige Elemente 16 und Löcher 18 zur Verbindung mit einer Unterfahrschutzbarriere auf.

Der Ausnehmungseingriffsbereich 14 ist plattenförmig ausgebildet und umfasst zwei Ausnehmungen 20, wobei die Ausnehmungen 20 bezogen auf die Plattenebene als einseitig offene Einbuchtungen des Ausnehmungseingriffsbereichs 14 ausgebildet sind. Dabei sind die zwei einseitig offenen Einbuchtungen bzw. Ausnehmungen 20 in verschiedene Richtungen, und zwar rechtwinklig, zueinander offen. An einem Rand der Ausbuchtungen 20 ist jeweils ein Einhakbereich 22 ausgebildet, der durch eine entsprechende Abschrägung das Aufschieben der Ausnehmungen 20 erleichtern soll. Ferner weist der Ausnehmungseingriffsbereich 14 zwischen den beiden Ausnehmungen 20 einen Führungsbereich 24 auf.

Das Riegelelement 12 umfasst einen Bolzen 26 mit einem Kopfbereich 28 und einem schmaleren Halsbereich 30. Der Riegel 12 umfasst ferner einen zylinderförmigen Bolzenaufnahmeraum 32, der durch eine Buchse 34 ausgebildet ist. Die Buchse 34 weist im Boden bzw. am Ende des Bolzenaufnaheraums 32 ein Loch auf, durch das ein Teil des Halsbereichs 30 des Bolzens 26 hindurchgeführt ist.

Der Riegel 12 umfasst ferner eine Feder 36, die um einen Teil des Halsbereichs 30 des Bolzens 26 herum angeordnet ist, und die sich mit ihrem einen Ende am Boden des Bolzenaufnaheraums 32 und mit ihrem anderen Ende am Kopfbereich 28 des Bolzens 26 abstützt.

Der Kopfbereich 28 des Bolzens 26 entspricht in seinem Durchmesser dem Durchmesser des Bolzenaufnahmeraums 32 und der Halsbereich 30 des Bolzens 26 entspricht in seinem Durchmesser dem Loch im Boden des Bolzenaufnahmeraums 32. Ferner weist die Buchse 34 eine Gegenschrägfläche 38 auf, über die sich ein Teil des Halsbereichs 30 des Bolzens 26 hinaus erstreckt, wobei in diesem Teil des Halsbereichs 30 des Bolzens 26 ein Handgriffverbindungsbereich 40 ausgebildet ist.

Das Unterfahrschutzhalterungselement 10 umfasst ferner einen Handgriff 42, der an einem Ende mit dem Handgriffverbindungsbereich 40 des Bolzens 26 verbunden ist, beispielsweise, wie in den Figuren angedeutet, über einen Spannstift, der in eine Öffnung des Handgriffverbindungsbereichs 40 des Bolzens 26 eingesteckt ist. Ferner weist der Handgriff 42 an diesem Ende auch eine Handgriffschrägfläche 44 auf, die komplementär zu der Gegenschrägfläche 38 der Buchse 34 ausgebildet ist.

Wie in Figur 3 gezeigt, ist das Rahmenverbindungselement als Platte bzw. plattenförmig ausgebildet und weist in einem Vorsprungseingriffsbereich 62 mehrere Löcher 52 und einen Vorsprung 54 mit einem Bund 56 und einem Einhakbereich 58 auf. Ferner weist das Rahmenverbindungselement 50 ein Verriegelungsloch 60 auf.

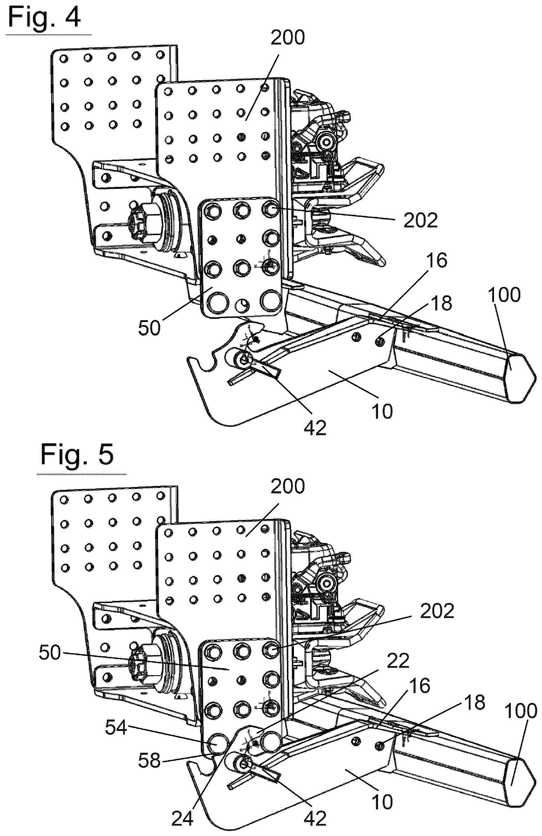

Wie die erfindungsgemäße Schnellverbindungsvorrichtung, die ein Unterfahrschutzhalterungselement 10 und ein Rahmenverbindungselement 50 umfasst, zur Verbindung einer Unterfahrschutzbarriere 100 mit dem Rahmen 200 eines Fahrzeugs (nicht gezeigt) genutzt wird, ist in Figuren 4 - 7 gezeigt.

Wie in Figur 4 gezeigt, ist die Unterfahrschutzbarriere 100 über die Löcher 18 und plattenförmige Elemente 16 bereits fest mit dem Unterfahrschutzhalterungselement 10 verbunden. Genauso ist das Rahmenverbindungselement 50 bereits über Schrauben bzw. Bolzen 202 fest unter Verwendung mehrerer der Löcher 52 verbunden.

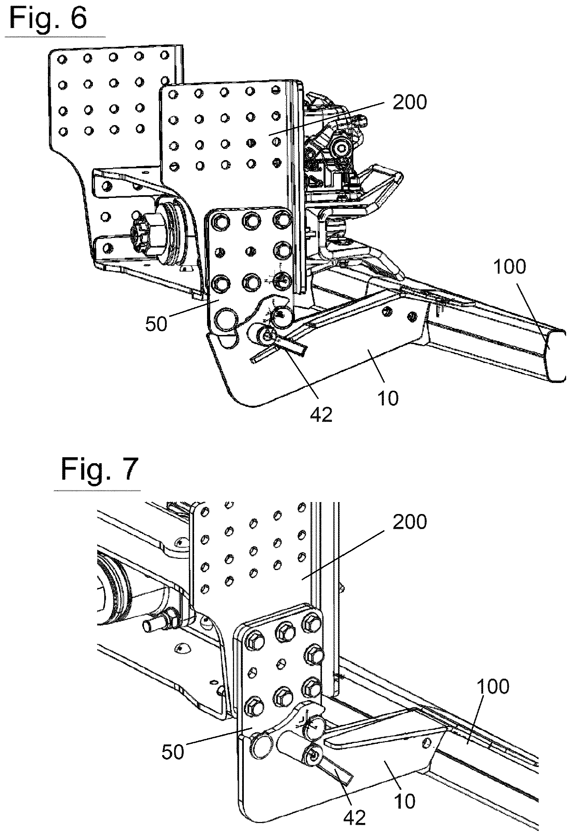

Wie in Figur 5 gezeigt, wird als erstes der Einhakbereich 58 des einen Vorsprungs 54 an den Führungsbereich 24 des Unterfahrschutzhalterungselements 10 angelegt, so dass der Einhakbereich 22 des Unterfahrschutzhalterungselements 10 oberhalb des Einhakbereichs 58 des anderen Vorsprungs 54 ist. Dann wird das Unterfahrschutzhalterungselement 10 mit Hilfe des Führungsbereichs 24 so entlang des Einhakbereichs 58 des einen Vorsprungs 54 geschoben, dass der Einhakbereich 58 des anderen Vorsprungs 54 von dem Einhakbereich 22 des Unterfahrschutzhalterungselements 10 umschlossen und der Einhakbereich 58 dieses anderen Vorsprungs 54 in einer der Ausnehmungen 20 des Vorsprungseingriffsbereichs 14 des Unterfahrschutzhalterungselements 10 aufgenommen wird, wie dies in Figur 6 gezeigt ist.

Wenn in der entsprechenden Ausnehmung 20 des Unterfahrschutzhalterungselements 10 der Halsbereich 58 des entsprechenden Vorsprungs 54 vollständig eingeführt ist, befindet sich der andere Vorsprung 54 des Vorsprungseingriffsbereichs 62 des Rahmenverbindungselements 50 gerade so über der anderen Ausnehmung 20 des Unterfahrschutzhalterungselements 10, dass durch eine Kippbewegung des Unterfahrschutzhalterungselements 10 um eine Achse, die durch die andere Ausnehmung 20 verläuft, die erste Ausnehmung 20 auf den Einhakbereich 58 des noch verbleibenden Vorsprungs 54 aufgeschoben wird.

Wenn dieses Aufschieben, wie in Figur 7 gezeigt, abgeschlossen ist, kann die momentan maximal von der Gegenschrägfläche 38 beabstandete Handgriffschrägfläche 44 durch eine Drehbewegung mit dem Handgriff 42 so gedreht werden, dass sie mit ihrer Fläche vollständig an der Gegenschrägfläche 38 anliegt, wodurch der Bolzen 26 aufgrund der Federkraft der Feder 36 durch das Verriegelungsloch 60 des Rahmenverbindungselements 50 hindurch geschoben wird. Dadurch ist die Unterfahrschutzbarriere 100 mit dem Rahmen 200 des Fahrzeugs verbunden.

Hierbei ist vorteilhaft, dass durch die Positionierung, die sich durch die Aufnahme der beiden Einhakbereiche 58 der Vorsprünge 54 in den Ausnehmungen 20 ergibt, der Bolzen 26 des Riegels 12 unmittelbar mit dem Verriegelungsloch 60 des Rahmenverbindungselements 50 zur Deckung kommt, so dass eine einfache Drehbewegung des Handgriffs 42 den Bolzen 26 in das Verriegelungsloch 60 einfährt bzw. ausfährt.

Äquivalent zu den Figuren 4 - 7 erfolgt die Entfernung der Unterfahrschutzbarriere 100 von dem Rahmen 200 des Fahrzeugs, wobei die Schritte entsprechend in umgekehrter Reihenfolge ausgeführt werden. Somit werden als erstes durch eine Drehbewegung des Handgriffs 42 die Handgriffsschrägfläche 44 und die Gegenschrägfläche 38 so weit gegeneinander verschoben, dass jeweils ihre maximal vorstehenden Enden gegeneinander anliegen, wodurch ihr Abstand maximal ist, wodurch die Federkraft der Feder 36 überwunden wird und der Bolzen 26 aus dem Verriegelungsloch 60 herausgezogen und in dem Bolzenaufnahmeraum 32 vollständig aufgenommen ist. Dann lässt sich das Unterfahrschutzhalterungselement 10 durch eine Drehbewegung nach unten kippen, so dass sich die eine Ausnehmung 20 von den Einhakbereich 58 des einen Vorsprungs 54 trennt. Anschließend kann unter Zuhilfenahme der Führung durch den Führungsbereich 24 auch der Einhakbereich 58 des anderen Vorsprungs 54 von der anderen Ausnehmung 20 getrennt werden und anschließend das ganze Unterfahrschutzhalterungselement 10 nach unten weggeschoben und von dem Fahrzeugrahmen 200 entfernt werden, wodurch die Unterfahrschutzbarriere 100 in einfacher und schneller Weise von dem Fahrzeugrahmen 200 und damit von dem Fahrzeug getrennt wird.

Selbstverständlich kann an der anderen Seite des Fahrzeugrahmens 200 ein gleichartiges Rahmenverbindungselement 50 und entsprechend an der Unterfahrschutzbarriere 100 ein weiteres gleichartiges Unterfahrschutzhalterungselement 10 angebracht sein, so dass die Unterfahrschutzbarriere 100 an zwei Punkten des Fahrzeugrahmens 200 befestigt ist. Dabei ist durch das in Figur 4 - 7 gezeigte Einhaken des Unterfahrschutzhalterungselements 10 in das Rahmenverbindungselement 50 sichergestellt, dass die beiden Handgriffe 42 auf den verschiedenen Seiten nacheinander betätigt werden können, um entsprechend auf der jeweiligen Seite zu verriegeln oder zu entriegeln, ohne dass eines der beiden Unterfahrschutzhalterungselemente 10 gehalten werden muss oder beim Lösen eines Riegels 12 auf einer Seite nach unten weg rutscht und dadurch die ganze Vorrichtung sich möglicherweise verklemmt. Dadurch kann die erfindungsgemäße Schnellverbindungsvorrichtung auch von nur einer Person genutzt werden, indem in der gezeigten Weise die Unterfahrschutzhalterungselemente 10 und die Rahmenverbindungselemente 50 durch Einhängen vorläufig gegeneinander positioniert werden, woraufhin nacheinander an beiden Seiten der Handgriff 42 zur Betätigung des Riegels 12 verwendet werden kann. Dies gilt entsprechend umgekehrt auch für das Trennen der Unterfahrschutzbarriere 100 von dem Fahrzeugrahmen 200.

Erfindungsgemäß kann der Vorsprungseingriffsbereich 62 auch an dem Unterfahrschutzhalterungselement 10 angeordnet werden und entsprechend der Ausnehmungseingriffsbereich 14 an dem Rahmenverbindungselement 50. Ebenfalls kann das Rahmenverbindungselement 50 in beiden Ausführungsformen als integrales Teil des Fahrzeugrahmens 200 oder des Fahrzeugs ausgebildet sein.

## Patentansprüche

1. Fahrzeug umfassend einen Fahrzeugrahmen (200) und eine Schnellverbindungsvorrichtung zur Verbindung eines Unterfahrschutzes mit dem Fahrzeug umfassend ein Unterfahrschutzhalterungselement (10) und ein Rahmenverbindungselement (50), wobei das Unterfahrschutzhalterungselement (10) und das Rahmenverbindungselement (50) zueinander komplementäre Eingriffsbereiche (14, 62) aufweisen, so dass das Unterfahrschutzhalterungselement (10) mit dem Rahmenverbindungselement (50) in Eingriff gebracht werden kann, wobei das Rahmenverbindungselement (50) ein Teil des Fahrzeugrahmens (200) ist oder einen plattenförmigen Bereich mit Löchern (52), der mit dem Fahrzeugrahmen (200) verschraubt ist, aufweist, wobei das Unterfahrschutzhalterungselement (10) eine Unterfahrschutzbarriere (100) umfasst, **dadurch gekennzeichnet, dass** ein werkzeuglos betätigbares Riegelelement (12) an dem Unterfahrschutzhalterungselement (10) und/oder dem Rahmenverbindungselement (50) angeordnet ist, um im Falle des Eingriffs des Unterfahrschutzhalterungselements (10) und des Rahmenverbindungselements (50) das Unterfahrschutzhalterungselement (10) mit dem Rahmenverbindungselement (50) zu verriegeln, wobei ein Eingriffsbereich (14, 62) ein Vorsprungseingriffsbereich (62) mit mindestens einem Vorsprung (54) mit einem Bund (56) und einem Einhakbereich (58) und der andere Eingriffsbereich (14, 62) ein Ausnehmungseingriffsbereich (14) mit mindestens einer Ausnehmung (20) ist, die bei Eingriff des Unterfahrschutzhalterungselements (10) und des Rahmenverbindungselements (50) den Vorsprung (54) des Vorsprungseingriffsbereichs (62) teilweise umschließt, wobei der Ausnehmungseingriffsbereich (14) als eine Platte mit mindestens zwei Ausnehmungen (20) ausgebildet ist, wobei die Ausnehmungen (20) in der Plattenebene als einseitig offene Einbuchtungen (20) des Ausnehmungseingriffsbereichs (14) ausgebildet sind, wobei mindestens zwei der einseitig offenen Einbuchtungen (20) in verschiedene Richtungen offen sind, wobei der Vorsprungseingriffsbereich (62) zwei Vorsprünge (54) umfasst, wobei der Ausnehmungseingriffsbereich (14) zwischen den zwei Ausnehmungen (20) einen gebogenen Führungsbereich (24) und einen Einhakbereich (22) aufweist, wobei Vorsprünge (54), Ausnehmungen (20), Einhakbereich (22) und Führungsbereich (24) so ausgebildet sind, dass bei Positionierung des Einhakbereich (58) des einen Vorsprungs (54) an dem Führungsbereich (24) eine der Ausnehmungen (20) auf den anderen Vorsprung (54) ausgerichtet ist, der Einhakbereich (22) des Ausnehmungseingriffsbereichs (14) oberhalb des Einhakbereichs (58) des anderen Vorsprungs (54) ist und durch kontaktierende Bewegung des gebogenen Führungsbereichs (24) entlang des Einhakbereichs (58) des einen Vorsprungs (54) die eine der Ausnehmungen (20) auf den Einhakbereich (58) des anderen Vorsprungs (54) aufschiebbar ist, so dass der Einhakbereich (58) des anderen Vorsprungs (54) von dem Einhakbereich (22) des Ausnehmungseingriffsbereichs (14) oben umschlossen ist.

2. Fahrzeug nach Anspruch 1, **dadurch gekennzeichnet, dass** der Ausnehmungseingriffsbereich (14) wenigstens teilweise an dem Bund (56) anliegt, wobei bevorzugt das Rahmenverbindungselement (50) den Vorsprungseingriffsbereich (62) und das Unterfahrschutzhalterungselement (10) den Ausnehmungseingriffsbereich (14) aufweist.

3. Fahrzeug nach einem der vorhergehenden Ansprüche, **dadurch gekennzeichnet, dass** das Riegelelement (12) einen Bolzen (26) umfasst, der durch die Betätigung verschoben wird, so dass er über das Unterfahrschutzhalterungselement (10) bzw. das Rahmenverbindungselement (50) hinausragt und durch Zusammenwirken mit einen Verriegelungsloch (60) des Rahmenverbindungselements (50) bzw. des Unterfahrschutzhalterungselements (10) die Verriegelung bewirkt.

4. Fahrzeug nach Anspruch 3, **dadurch gekennzeichnet, dass** das Riegelelement (12) einen Bolzenaufnahmeraum (32) und eine Feder (36) umfasst, wobei der durch die Feder (36) vorgespannte Bolzen (26) durch Betätigung entlang des Bolzenaufnahmeraums (32) verschoben wird und bei Verriegelung aus diesem hinausragt.

5. Fahrzeug nach Anspruch 4, **dadurch gekennzeichnet, dass** der Bolzenaufnahmeraum (32) zylinderförmig ist, wobei der Bolzen (26) einen dem Durchmesser des Bolzenaufnahmeraums (32) entsprechenden Kopfbereich (28) und einen gegenüber diesem dünneren Halsbereich (30) umfasst, wobei die Feder (36) um den Halsbereich (30) herum und zwischen dem Kopfbereich (28) und einem Boden des Bolzenaufnahmeraums (32) angeordnet ist, wobei sich der Halsbereich (30) durch ein Loch im Boden des Bolzenaufnahmeraums (32) über diesen hinaus erstreckt und einen Handgriffverbindungsbereich (40) ausbildet.

6. Fahrzeug nach einem der vorhergehenden Ansprüche, **dadurch gekennzeichnet, dass** das Riegelelement (12) durch einen Handgriff (42) betätigbar ist.

7. Fahrzeug nach Anspruch 6, **dadurch gekennzeichnet, dass** der Handgriff (42) eine Handgriffschrägfläche (44) aufweist und das Riegelelement (12) eine weitere komplementäre Gegenschrägfläche (38) aufweist, wobei durch Drehung des Handgriffs (42) die Handgriffschrägfläche (44) und die Gegenschrägfläche (38) gegeneinander gedreht werden, wobei durch die damit verbundene Verschiebung das Riegelelement (12) betätigbar ist.

## Claims

1. Vehicle comprising a vehicle frame (200) and a rapid-connection device for connecting an underride guard to the vehicle, comprising an underride guard support element (10) and a frame connection element (50), the underride guard support element (10) and the frame connection element (50) having mutually complementary engagement regions (14, 62) such that the underride guard support element (10) can be brought into engagement with the frame connection element (50), the frame connection element (50) being a part of the vehicle frame (200) or having a plate-shaped region that comprises holes (52) and is bolted to the vehicle frame (200), the underride guard support element (10) comprising an underride guard barrier (100), **characterised in that** a locking element (12) that can be actuated in a tool-free manner is arranged on the underride guard support element (10) and/or the frame connection element (50) in order to lock the underride guard support element (10) to the frame connection element (50) in the event of engagement of the underride guard support element (10) and the frame connection element (50), one engagement region (14, 62) being a projection engagement region (62) comprising at least one projection (54) having a collar (56) and a hook-in region (58) and the other engagement region (14, 62) being a recess engagement region (14) comprising at least one recess (20) which partially encloses the projection (54) of the projection engagement region (62) upon engagement of the underride guard support element (10) and the frame connection element (50), the recess engagement region (14) being designed as a plate having at least two recesses (20), the recesses (20) in the plate plane being designed as indentations (20) of the recess engagement region (14) which are open at one side, at least two of the indentations (20) which are open at one side being open in different directions, the projection engagement region (62) comprising two projections (54), the recess engagement region (14) having a curved guide region (24) and a hook-in region (22) between the two recesses (20), projections (54), recesses (20), hook-in region (22) and guide region (24) being designed such that when the hook-in region (58) of one projection (54) is positioned on the guide region (24), one of the recesses (20) is oriented towards the other projection (54), the hook-in region (22) of the recess engagement region (14) is above the hook-in region (58) of the other projection (54) and, by means of a contacting movement of the curved guide region (24) along the hook-in region (58) of one projection (54), one of the recesses (20) can be slid onto the hook-in region (58) of the other projection (54) such that the hook-in region (58) of the other projection (54) is enclosed from above by the hook-in region (22) of the recess engagement region (14).

2. Vehicle according to claim 1, **characterised in that** the recess engagement region (14) rests at least partially on the collar (56), the frame connection element (50) preferably having the projection engagement region (62) and the underride guard support element (10) preferably having the recess engagement region (14).

3. Vehicle according to either of the preceding claims, **characterised in that** the locking element (12) comprises a bolt (26) which is displaced by means of the actuation such that it extends beyond the underride guard support element (10) or the frame connection element (50) and effects the locking by interacting with a locking hole (60) in the frame connection element (50) or the underride guard support element (10).

4. Vehicle according to claim 3, **characterised in that** the locking element (12) comprises a bolt receiving space (32) and a spring (36), the bolt (26) pretensioned by the spring (36) being displaced along the bolt receiving space (32) by actuation and protruding therefrom upon locking.

5. Vehicle according to claim 4, **characterised in that** the bolt receiving space (32) is cylindrical, the bolt (26) comprising a head region (28) corresponding to the diameter of the bolt receiving space (32) and a comparatively thinner neck region (30) relative thereto, the spring (36) being arranged around the neck region (30) and between the head region (28) and a bottom of the bolt receiving space (32), the neck region (30) extending through a hole in the bottom of the bolt receiving space (32) and therebeyond and forming a handle connection region (40).

6. Vehicle according to any of the preceding claims, **characterised in that** the locking element (12) can be actuated by a handle (42).

7. Vehicle according to claim 6, **characterised in that** the handle (42) has an inclined handle surface (44) and the locking element (12) has an additional complementary inclined mating surface (38), the inclined handle surface (44) and the inclined mating surface (38) being rotated relative to one other by rotating the handle (42), it being possible to actuate the lock element (12) by the associated displacement.

## Revendications

1. Véhicule comprenant un châssis de véhicule (200) et un dispositif de liaison rapide pour la liaison d'une protection anti-encastrement au véhicule comprenant un élément de fixation de protection anti-encastrement (10) et un élément de liaison de châssis (50), dans lequel l'élément de fixation de protection anti-encastrement (10) et l'élément de liaison de châssis (50) présentent des zones de mise en prise (14, 62) complémentaires l'une de l'autre, de sorte que l'élément de fixation de protection anti-encastrement (10) peut être mis en prise avec l'élément de liaison de châssis (50), dans lequel l'élément de liaison de châssis (50) est une partie du châssis de véhicule (200) ou présente une zone en forme de plaque avec des trous (52), qui est vissée au châssis de véhicule (200), dans lequel l'élément de fixation de protection anti-encastrement (10) comprend une barrière de protection anti-encastrement (100), **caractérisé en ce qu'**un élément de verrouillage (12) actionnable sans outil est agencé au niveau de l'élément de fixation de protection anti-encastrement (10) et/ou de l'élément de liaison de châssis (50) pour verrouiller, dans le cas de la mise en prise de l'élément de fixation de protection anti-encastrement (10) et de l'élément de liaison de châssis (50), l'élément de fixation de protection anti-encastrement (10) avec l'élément de liaison de châssis (50), dans lequel une zone de mise en prise (14, 62) est une zone de mise en prise à saillie (62) avec au moins une saillie (54) avec un collet (56) et une zone d'accrochage (58) et l'autre zone de mise en prise (14, 62) est une zone de mise en prise à évidement (14) avec au moins un évidement (20), qui entoure en partie la saillie (54) de la zone de mise en prise à saillie (62) lors de la mise en prise de l'élément de fixation de protection anti-encastrement (10) et de l'élément de liaison de châssis (50), dans lequel la zone de mise en prise à évidement (14) est réalisée en tant que plaque avec au moins deux évidements (20), dans lequel les évidements (20) sont réalisés dans le plan de plaque en tant que renfoncements ouverts d'un côté (20) de la zone de mise en prise à évidement (14), dans lequel au moins deux des renfoncements ouverts d'un côté (20) sont ouverts dans différentes directions,
dans lequel la zone de mise en prise à saillie (62) comprend deux saillies (54), dans lequel la zone de mise en prise à évidement (14) présente entre les deux évidements (20) une zone de guidage courbe (24) et une zone d'accrochage (22), dans lequel des saillies (54), des évidements (20), une zone d'accrochage (22) et une zone de guidage (24) sont réalisées de sorte que lors du positionnement de la zone d'accrochage (58) de l'une saillie (54) au niveau de la zone de guidage (24), un des évidements (20) est dirigé vers l'autre saillie (54), la zone d'accrochage (22) de la zone de mise en prise à évidement (14) est au-dessus de la zone d'accrochage (58) de l'autre saillie (54) et, par mouvement de contact de la zone de guidage courbe (24) le long de la zone d'accrochage (58) de l'une saillie (54), l'un des évidements (20) peut être poussé sur la zone d'accrochage (58) de l'autre saillie (54) de sorte que la zone d'accrochage (58) de l'autre saillie (54) est entourée en haut par la zone d'accrochage (22) de la zone de mise en prise à évidement (14).

2. Véhicule selon la revendication 1, **caractérisé en ce que** la zone de mise en prise à évidement (14) repose au moins en partie sur le collet (56), dans lequel de préférence l'élément de liaison de châssis (50) présente la zone de mise en prise à saillie (62) et l'élément de fixation de protection anti-encastrement (10) présente la zone de mise en prise à évidement (14).

3. Véhicule selon l'une quelconque des revendications précédentes, **caractérisé en ce que** l'élément de verrouillage (12) comprend un boulon (26), qui est déplacé par l'actionnement de sorte qu'il dépasse de l'élément de fixation de protection anti-encastrement (10) ou de l'élément de liaison de châssis (50) et, par coopération avec un trou de verrouillage (60) de l'élément de liaison de châssis (50) ou de l'élément de fixation de protection anti-encastrement (10), provoque le verrouillage.

4. Véhicule selon la revendication 3, **caractérisé en ce que** l'élément de verrouillage (12) comprend un espace de logement de boulon (32) et un ressort (36), dans lequel le boulon (26) précontraint par le ressort (36) est déplacé le long de l'espace de logement de boulon (32) par actionnement et dépasse de celui-ci lors du verrouillage.

5. Véhicule selon la revendication 4, **caractérisé en ce que** l'espace de logement de boulon (32) est cylindrique, dans lequel le boulon (26) comprend une zone de tête (28) correspondant au diamètre de l'espace de logement de boulon (32) et une zone de col (30) plus mince par rapport à celle-ci, dans lequel le ressort (36) est agencé autour de la zone de col (30) et entre la zone de tête (28) et un fond de l'espace de logement de boulon (32), dans lequel la zone de col (30) s'étend à travers un trou dans le fond de l'espace de logement de boulon (32) au-delà de celui-ci et forme une zone de liaison de poignée (40).

6. Véhicule selon l'une quelconque des revendications précédentes, **caractérisé en ce que** l'élément de verrouillage (12) peut être actionné par une poignée (42).

7. Véhicule selon la revendication 6, **caractérisé en ce que** la poignée (42) présente une surface inclinée de poignée (44) et l'élément de verrouillage (12) présente une autre surface opposée inclinée complémentaire (38), dans lequel la surface inclinée de poignée (44) et la surface opposée inclinée (38) sont tournées l'une par rapport à l'autre par rotation de la poignée (42), dans lequel l'élément de verrouillage (12) peut être actionné par le déplacement qui y est associé.
